# EUROPEAN PATENT APPLICATION

(11) **EP 1 424 630 A1**
(43) Date of publication of application: **02.06.2004**
(21) Application number: 02754169.7
(22) Date of filing: 29.08.2002
(51) Int. Cl.: G06F 9/455

(54) **A HAVING SADDLE-SHAPE MICROPROCESSOR/SINGLE-CHIP IN-CIRCUIT EMULATOR**

(30) Priority: 05.09.2001 CN 01259324
(71) Applicant: Xu, Jian, Beijing 100020 (CN)
(72) Inventor: Xu, Jian, Beijing 100020 (CN)
(74) Representative: Finnie, Peter John
(86) International application number: PCT/CN2002/000600
(87) International publication number: WO 2003/021435

(57) **Abstract**

The present invention provides an In-Circuit emulator for microprocessor/microcontroller of On-Chip structure directly emulate-connecting with the object system. Said In-Circuit emulator has single or multiple mechanical structures comprising printed circuit boards which are integrally installed. The printed circuit boards are connected with each other by the board-to-board connectors used for the printed circuit boards, therefore to form a printed circuit board module comprising single or multiple printed circuit boards. Said printed circuit board module comprises all the function members of an In-Circuit emulator for microprocessor/microcontroller, in which communication interface, all the emulate circuits and emulate probe are included. Said printed circuit board module can be directly emulate-connected with object system, and communicate with the terminal. Said printed circuit board member can be integrally installed on object system through emulate probe. Said In-Circuit emulator of the present invention has smaller size, high reliance, convenience for using and carrying, furthermore, has higher In-Circuit emulate frequency relative to the In-Circuit emulator for microprocessor/microcontroller available today.

## Description

### FIELD OF THE INVENTION

The present invention relates to an In-Circuit emulator for microprocessor/microcontroller.

### BACKGROUND OF THE INVENTION

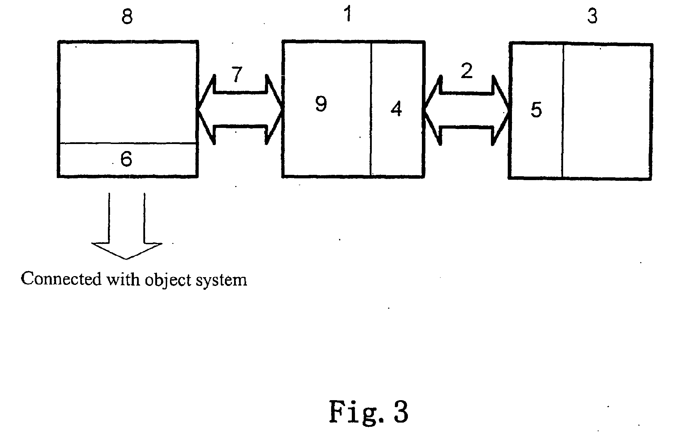

In-Circuit emulator for microprocessor/microcontroller (Fig. 3) available today consists of three parts: main body, emulate cable and emulate adapter. The main body comprises communication interface and part of emulate circuit. One end of the emulate cable is connected with the main body, and the other end is connected with the emulate adapter. The emulate adapter comprises part of emulate circuit and emulate probe, and emulate connection with object system can be fulfilled through the emulate probe (there are generally three ways of emulate connection, which are: 1.inserting the emulate probe into the socket of the microprocessor/microcontroller on the system board; 2.connecting with the terminal pad of the microprocessor/microcontroller on the object system board; 3.connecting with the chip of the shielded microprocessor/microcontroller on the object system board). In addition, the emulator is connected with the terminals via communication cable (the terminals are usually desktop computers or portable computers).

The In-Circuit emulator for microprocessor/microcontroller available today has two primary defects:
1. The object system cannot be directly emulate-connected. Because the In-Circuit emulator must be connected with the object system via the emulate cable, the emulate noise is relatively higher, and the frequency of In-Circuit emulate is lower;
2. The In-Circuit emulator is big in size, comprising a plurality of parts, including emulate cable lines that consist of dozens or even hundreds of leads. Thus it is not very convenient to use or carry such an emulator.

### SUMMARY OF THE INVENTION

The present invention is to overcome the defects in the technology available today, and to provide an In-Circuit emulator for microprocessor/microcontroller of On-Chip structure to directly emulate-connect with the object system.

The In-Circuit emulator for microprocessor/microcontroller of the present invention consists of single or multiple mechanical structures comprising printed circuit boards, which are integrally installed. In case of multiple printed circuit boards, the printed circuit boards are connected with each other by the board-to-board connectors used for the printed circuit boards, so as to form a printed circuit board module. Said printed circuit board module comprises communication interface, all the emulate circuits and emulate probe.

Parts of or the entire said printed circuit board module may be installed with shell or insulatively encapsulated. Said printed circuit board module is directly emulate-connected with the object system through emulate probe, and directly and integrally installed on the object system through emulate probe. Said printed circuit board module is connected with the terminal communication via the communication interface included with said printed circuit board module per se.

Parts of or the entire outer-side pins of said In-Circuit emulator may be installed with electrical impact protection means, in order to resist static electricity and the impact of outer voltage source within a certain range.

Parts of or the entire inner-side circuits of said In-Circuit emulator may be insulatively encapsulated with solidified liquid insulated materials, to resist body static and the impact of outer voltage source within a certain range. When the printed circuit board module is being insulatively encapsulated, the insulating materials may be incorporated to the printed circuit board module and the elements installed on its surface by means of staining and sculpting, so as to acquire an admirable appearance.

Said In-Circuit emulator can communicate with the terminals via USB (Universal Serial Bus). In such a case, said In-Circuit emulator has a USB connector, which can be connected with USB cable at one end, with the other end having a standard USB connector which can be connected with USB interface of the terminals. Said In-Circuit emulator uses USB cable to fulfill the functions of both communication and power supply at the same time.

Said In-Circuit emulator can use the board-to-board connector used for the printed circuit board to form the emulate probe interface, by which said In-Circuit emulator can be installed with emulate probes which are different in package, to adapt to microprocessors/microcontrollers which are different in package. Said emulate probe interface can be used to replace the damaged emulate probes.

Specific structures and features of the present invention shall be further described with the implementing examples in combination of the appended drawings. The following implementing examples are to specify the present invention, and not to limit it.

### BRIEF DESCRIPTION OF THE DRAWINGS

Fig.1 is a structure diagram of an In-Circuit emulator for microprocessor/microcontroller of On-Chip structure.
Fig.2 is a state diagram of embodiment examples of an In-Circuit emulator for microprocessor/microcontroller of On-Chip structure.
Fig.3 is a structure diagram of an In-Circuit emulator for microprocessor/microcontroller available today.

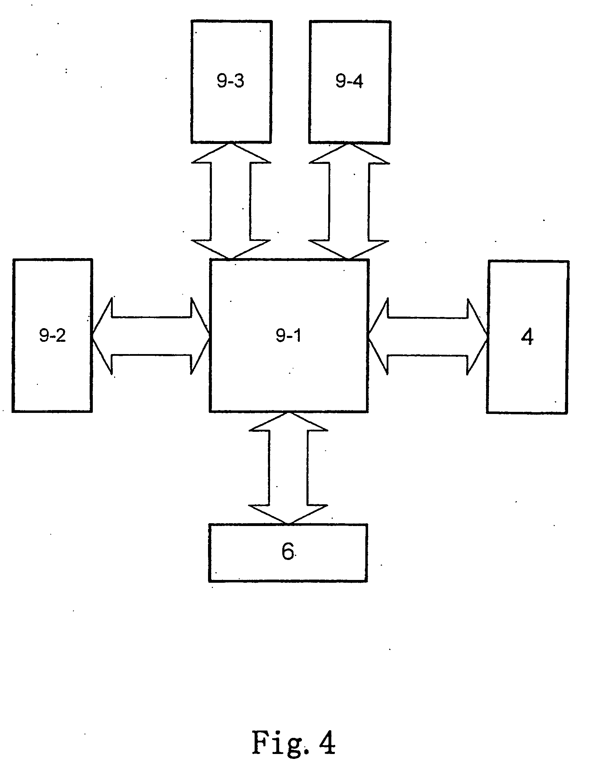

Fig.4 is an inner structure diagram of an In-Circuit emulator for microprocessor/microcontroller of On-Chip structure.
Fig.5 is a circuit diagram of electrical impact protection means installed in the embodiment examples of an In-Circuit emulator for microprocessor/microcontroller of On-Chip structure.
Fig.6 is a diagram of insulative encapsulating the inner-side circuit in the embodiment examples of an In-Circuit emulator for microprocessor/microcontroller of On-Chip structure.
Fig.7 is a diagram of emulate probe interface installed in the embodiment examples of an In-Circuit emulator for microprocessor/microcontroller of On-Chip structure.

### DETAILED DESCRIPTION OF PREFERRED EMBODIMENT

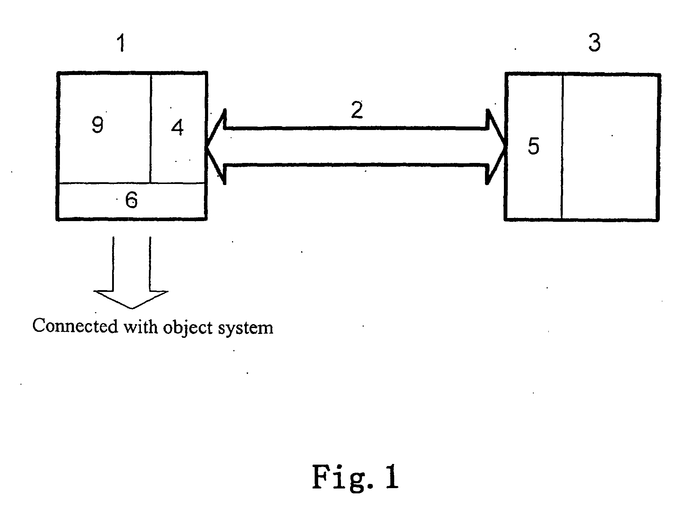

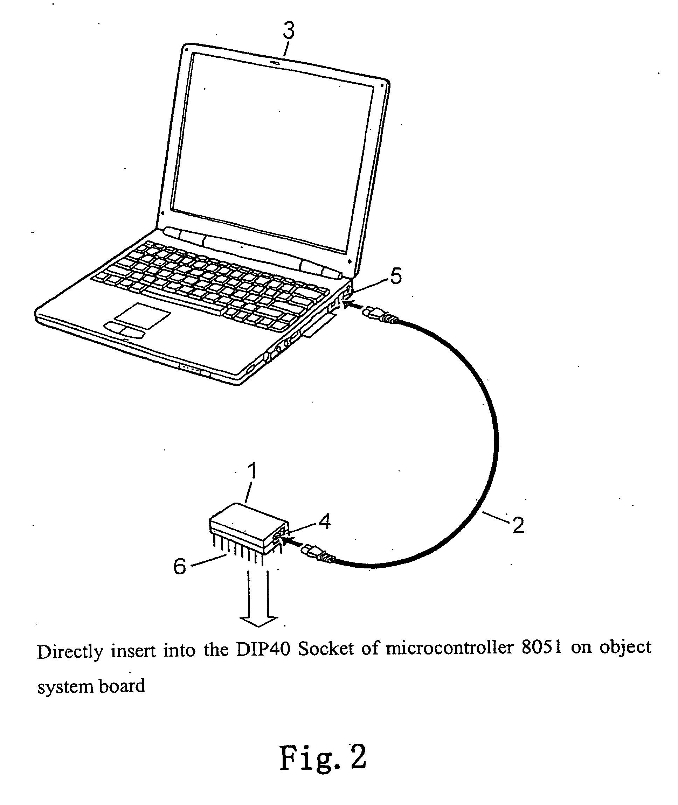

As shown in Figs. 1 and 2, In-Circuit emulator 1 for microprocessor/microcontroller of the present invention, which is included within a printed circuit board module, comprises communication interface 4, total emulate circuit 9 and emulate probe 6.

While in use, emulate probe 6 of said emulator is directly emulate-connected with the object system, USB connector of communication interface 4 of said emulator is connected with USB cable 2, the other end of USB cable 2 is connected with the standard USB interface 5 of terminal 3.

During the procession, control signal and data are transmitted from terminal 3 to said emulator by passing USB cable 2, and are sent to the object system by passing emulator probe of emulator 1. Signal and data from object system are transmitted to said emulator 1 by emulate probe 6, then transmitted to terminal 3 by passing USB cable 2, finally displayed and processed on terminal 3.

The entire emulate circuit 9 of an In-Circuit emulator 1 of microprocessor/microcontroller of the present invention comprises controller 9-1, emulate memory 9-2, emulate synchronous interface 9-3 and external signal interface 9-4. During the work procession, emulate controller 9-1 controls procession of the whole emulation. Under the control of emulate controller 9-1, emulate memory 9-2 replaces the memory of object system to work. Under the control of emulate controller 9-1, emulate synchronous interface 9-3 communicates with other devices, and fulfill the synchronous emulation. External signal interface 9-4 is connected with testing node of object system, providing more sufficient control signal for emulate controller 9-1.

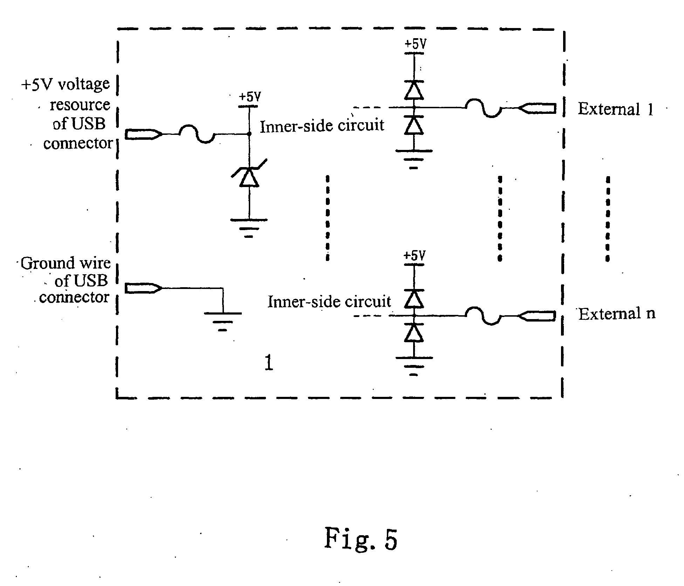

As shown in Fig. 5, all the external pins (except ground wire) of an In-Circuit emulator 1 of microprocessor/microcontroller of the present invention are individually installed with electrical impact protection means. Electrical impact can reach inner-side circuit from external pin only by passing a self-reusable fuse, while the corresponding inner-side end is installed with a voltage clamping. When singular external voltage source impact takes place, the inner-side voltage clamping can control the voltage of inner-side end within a normal range, and force the resetable fuse to generate interdiction response, so as to protect inner-side circuit. When singular external voltage source impact disappears for a while, the resetable fuse can resume its normal functions, so does In-Circuit emulator 1.

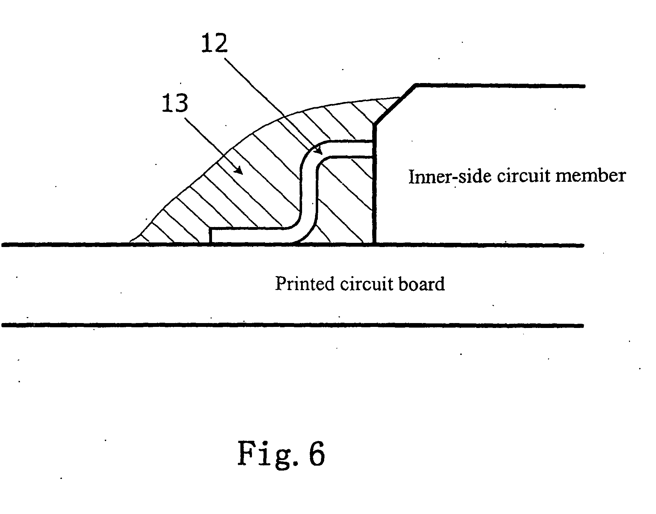

As shown in Fig. 6, the entire inner-side circuit conductor 12 of In-Circuit emulator 1 for microprocessor /microcontroller of the present invention can be insulatively encapsulated with solidified liquid insulated materials 13, to resist body static and the impact of outer voltage source within a certain range.

The emulator of the present invention has compact structure, and its members are installed with a high density. Therefore it is difficult to maintain and replace members. By installing the resetable electrical impact protection means on each external pins (except ground wire) of said emulator, and insulatively-encapsulated inner-side circuit of emulator, reliance and endurance can be greatly improved.

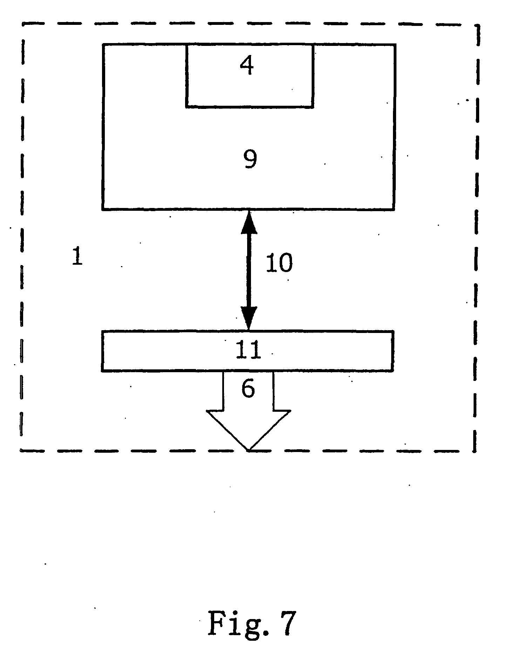

As shown in Fig. 7, In-Circuit emulator 1 for microprocessor/microcontroller of the present invention has emulate probe interface 10 between emulate circuit 9 and emulate probe 6. Said emulate probe 6 is knock-down connected with emulate circuit 9 through emulate probe interface 10. For those chips which belong to the same type but different pins package modes, only the corresponding emulate probe 6 is needed, not the whole emulator 1. Said emulate probe interface can be used to replace the damaged emulate probe.

Said emulate probe interface 10 can be fulfilled by the board-to-board connectors used for printed circuit board. Wherein, emulate probe is installed on printed circuit board 11 on which probes are settled, while emulate circuit 9 is installed on single or multiple circuit boards. Emulate circuit 9 is connected with printed circuit board 11, on which probes are installed, by the board-to-board connectors used for printed circuit board, which is regarded as emulate probe interface 10. Printed circuit board 11 installed with probes thereon can be knocked down and replaced.

The In-Circuit emulator for microcontroller 8051 set as an example, said In-Circuit emulator can be installed with emulate probe DIP-40pin via emulate probe interface, for adapting to microcontroller 8051 which is DIP-40pin package, or installed with emulate probe PLCC-44pin, for adapting to microcontroller 8051 which is PLCC-44pin package.

The In-Circuit emulator for microprocessor/microcontroller of the present invention introduces the On-Chip structure which is directly emulate-connected with object system, and abandons the emulate-connection structure of In-Circuit emulator of traditional microprocessor/microcontroller available today, which has emulate cable 7 in addition with emulate adapter 8. Therefore, compared with the In-Circuit emulator for microprocessor/microcontroller available today, said In-Circuit emulator has smaller size (In-Circuit emulator of microcontroller 8051 set as an example, the size of the In-Circuit emulator of the present invention is merely about 58*33*26mm), high reliance, convenience for using and carrying, furthermore, has higher In-Circuit emulate frequency.

Although the example of the knock-down emulate probe has been described as above, in order to reduce the size, the emulate probe can also be directly fixed on the printed circuit board of emulate circuit 9. According to the concept of the present invention, there are other transfigurations, which are included within the scope specified by the claims.

## Claims

1. An In-Circuit emulator for microprocessor/microcontroller of On-Chip structure, wherein said emulator has single or multiple mechanical structures comprising printed circuit boards, which are integrally installed; in case of multiple printed circuit boards, the printed circuit boards are connected with each other by the board-to-board connectors used for the printed circuit boards, to form a printed circuit board module; said printed circuit board module comprises communication interface, all the emulate circuits and emulate probe.

2. The In-Circuit emulator according to claim 1, wherein parts of or the entire said printed circuit board member can be installed with shell or insulatively encapsulated.

3. The In-Circuit emulator according to claim 1, wherein said printed circuit board module is directly emulate-connected with the object system through emulate probe, and directly integrally installed on the object system through emulate probe.

4. The In-Circuit emulator according to claim 1, wherein said printed circuit board communicates with a terminal via the communication interface in said printed circuit board module.

5. The In-Circuit emulator according to claim 1, wherein said In-Circuit emulator has a USB connector, which can be connected with USB cable at one end; the other end of USB cable has a standard USB connector, which can be connected with USB interface of the terminal.

6. The In-Circuit emulator according to claim 5, wherein said In-Circuit emulator uses USB cable to transmit data and provide power supply for said In-Circuit emulator.

7. The In-Circuit emulator according to claim 1, wherein total or local outer-side pins of said In-Circuit emulator can be installed with electrical impact protection means, for resisting static electricity and the impact of outer voltage source within a certain range.

8. The In-Circuit emulator according to claim 7, wherein said electrical impact protection means consists of a resetable fuse, which is connected with external pin and a corresponding voltage clamping on the end of inner-side;
when singular external voltage source impact takes place, the inner-side voltage clamping can control the voltage of inner-side end within a normal range, and force the resetable fuse to generate interdiction response; when singular external voltage source impact disappears for a while, the resetable fuse can come back to normal.

9. The In-Circuit emulator according to claim 1, wherein total or local inner-side circuit conductor of In-Circuit emulator for microprocessor/microcontroller of the present invention can be insulatively encapsulated with solidified liquid insulated materials, for resisting body static and the impact of outer voltage source within a certain range.

10. The In-Circuit emulator according to claims 1 and 9, wherein when the printed circuit board is being insulatively encapsulated, the insulating materials may be incorporated to the printed circuit board and the elements installed on its surface by means of staining and sculpting.

11. The In-Circuit emulator according to claim 1, wherein said In-Circuit emulator can use the board-to-board connectors used for the printed circuit board to form the emulate probe interface, by which said In-Circuit emulator can be installed with emulate probes which are different in package, to adapt to microprocessor/microcontroller which are different in package.
